# EUROPEAN PATENT SPECIFICATION

(11) **EP 2 233 908 B1**
(45) Date of publication and mention of the grant of the patent: **25.04.2018**
(21) Application number: 10250534.4
(22) Date of filing: 22.03.2010
(51) Int. Cl.: G01N 15/08, G01M 3/26, F01N 3/021, G01M 3/38, G01N 21/956, B01D 46/24, B01D 46/42, B01D 65/10, F01N 3/022

(54) **Honeycomb structure defect inspection device and honeycomb structure defect inspection method**
Vorrichtung zur Inspektion von Wabenstrukturdefekten und Verfahren zur Inspektion von Wabenstrukturdefekten
Dispositif d'inspection de défauts à structure en nid d'abeille et procédé d'inspection de défauts à structure en nid d'abeille

(30) Priority: 26.03.2009 JP 2009077823
(43) Date of publication of application: 29.09.2010
(73) Proprietor: NGK Insulators, Ltd., Nagoya City, Aichi Pref., 467-8530 (JP)
(72) Inventor: Koketsu, Naoto, Nagoya-city, Aichi-ken 467-8530 (JP); Kashiwagi, Nobuyuki, Nagoya-city, Aichi-ken 467-8530 (JP); Nishio, Akifumi, Nagoya-city, Aichi-ken 467-8530 (JP)
(74) Representative: Naylor, Matthew John

(56) References cited:
- EP-A2- 0 395 932
- JP-A- 2002 177 719
- US-A1- 2008 044 317
- US-A1- 2008 210 000
- US-B1- 7 043 964

## Description

### BACKGROUND OF THE INVENTION AND RELATED ART STATEMENT

The present invention relates to a honeycomb structure defect inspection device used to inspect the presence/absence of holes or cracks which are not present in a normal honeycomb structure and which are large as compared with the pore diameters of a honeycomb structure, that is, defects of the honeycomb structure, and a honeycomb structure defect inspection method.

In an exhaust gas discharged from a diesel engine or the like, a large amount of particulate matter (hereinafter referred to as the "PM") made of soot (carbon graphite) and the like is included, and the PM becomes a cause for atmospheric pollution. A diesel particulate filter (DPF) for collecting the PM is mounted in an exhaust system of the diesel engine or the like.

As the DPF, for example, a plugged honeycomb structure made of a ceramic material is used (e.g., see JP-A-2001-269585). First, the plugged honeycomb structure is a honeycomb structure comprising a cell structure portion constituted of partition walls disposed to form a plurality of cells extending through the structure in an axial direction and an outer peripheral wall disposed along the outer periphery of the cell structure portion. In the plugged honeycomb structure, one end of each cell of this honeycomb structure is plugged with a plugging portion. In the plugged honeycomb structure, the cells which are not provided with the plugging portions on an inlet side are provided with the plugging portions on an outlet side, and the cells provided with the plugging portions on the inlet side are not provided with the plugging portions on the outlet side. Moreover, the plugging portions are disposed in a checkered pattern when observed from the end face of the plugged honeycomb structure. According to such an arrangement of the plugging portions, in the plugged honeycomb structure, a gas to be treated flows into the cells from the inlet side, passes through the ceramic porous partition walls which partition the cells while having the PM collected, and is discharged from the other cells on the outlet side.

In the plugged honeycomb structure used as the DPF, the partition wall having a defect such as a large hole, crack, or the like impairs a PM collecting function because the PM passes through the partition wall from the defect portion thereof. Moreover, another type of DPF has a configuration in which a plurality of plugged honeycomb structure segments each having a predetermined size and shape are combined. In this type of DPF, in a case where one plugged honeycomb structure segment has a defect in a partition wall thereof, the whole DPF becomes a defective product. Therefore, the remaining normal plugged honeycomb structure segments included in this DPF are wasted. As understood from these situations, the presence/absence of a defect such as the large hole, crack, or the like in the partition wall of the plugged honeycomb structure is important from the viewpoints of the function and productivity of the plugged honeycomb structure. Therefore, many technologies have been developed in the defect inspection of the partition walls of the plugged honeycomb structure up to now.

JP-A-2002-357562 discloses a method of introducing fine particles into cells from one end of a plugged honeycomb structure, and observing the behavior of the fine particles passed through partition walls and discharged from the ends of cells other than the cells into which the fine particles have been introduced in the other end of the structure to inspect the presence/absence of defects of the partition walls. According to this inspection method, when a defect such as a large hole, crack, or the like is present in a certain partition wall, the fine particles are discharged from the cell constituted of this partition wall having the defect portion in a state different from that of a cell constituted of normal partition walls. JP-A-2004-286703 discloses a method of introducing water particles into cells of a plugged honeycomb structure instead of the above fine particles to inspect the presence/absence of defect portions of partition walls.

However, the inspection methods of JP-A-2002-357562 and JP-A-2004-286703 have a poor detection sensitivity of defect portions of partition walls in the vicinity of an outer peripheral wall of a plugged honeycomb structure. The outer peripheral wall of the plugged honeycomb structure is also made of a porous ceramic material, and hence a pressure for passing fine particles or water particles through cells leaks out of the outer peripheral wall. The amount of the fine particles or the water particles to be discharged even from the cells constituted of normal partition walls in the vicinity of the outer peripheral wall decreases. Therefore, a clear difference is not made in the amount of the discharged fine particles or water particles between the cells constituted of the normal partition walls and the cells constituted of the partition walls having the defect portions in the vicinity of the outer peripheral wall, and it becomes difficult to judge the presence/absence of the defect portions.

US 7043964 B1 discloses a method and system for detecting leaks in a plugged honeycomb structure.

JP 2002-177719 A discloses a ceramic structure where the ceramic members are mutually jointed through a sealing agent.

US 2008/0044317 A1 discloses a holding sealer, an exhaust gas processing device and a manufacturing method of the same.

US 2008/0210000 A1 discloses a filter testing apparatus and an operating method of a filter testing apparatus for testing parallel filters in a clean room.

EP 0395932 A2 discloses a photoelectric apparatus suitable for determining losses in flexible pipe filters.

### SUMMARY OF THE INVENTION

The present invention has been developed in view of the above problems and aims to provide a honeycomb structure defect inspection device which detects defect portions of partition walls constituting cells in the vicinity of an outer peripheral wall with a satisfactory sensitivity, and a honeycomb structure defect inspection method.

To achieve the above object, as a result of intensive investigations, the present inventor has found a method for suppressing the leakage of a pressure from the outer peripheral wall of the honeycomb structure and has completed the present invention. That is, according to the present invention, there are provided a honeycomb structure defect inspection device and a honeycomb structure defect inspection method as follows.
[1] A honeycomb structure defect inspection device for a honeycomb structure as set out in claim 1.
[2] The honeycomb structure defect inspection device according to the above [1], wherein the outer peripheral wall covering means covers the outer peripheral wall so that a cover ratio of a half of the outer peripheral wall on the side of the one end face through which the detection medium is introduced is larger than that of a half of the outer peripheral wall on the side of the other end face from which the detection medium is discharged.
[3] The honeycomb structure defect inspection device according to the above [1] or [2], wherein the outer peripheral wall covering means comprises at least one elastic member that is deformable in accordance with the shape of the outer peripheral wall, and the elastic member is allowed to adhere to the outer peripheral wall to cover the outer peripheral wall.
[4] The honeycomb structure defect inspection device according to the above [3], wherein the outer peripheral wall covering means comprises at least one elastic member, an end of the elastic member is brought into contact with another portion of the same elastic member or a portion of another elastic member to form an elastic ring-shaped member having an internal storage space, and the elastic member is allowed to adhere to the outer peripheral wall so that the elastic ring-shaped member covers the outer peripheral wall while the honeycomb structure is received in the storage space of the elastic ring-shaped member.
[5] The honeycomb structure defect inspection device according to the above [4], wherein the portion of the same elastic member or the portion of another elastic member brought into contact with the end of the elastic member is changed to adjust the size of the storage space and the adhesion strength of the elastic member adhering to the outer peripheral wall so that the elastic ring-shaped member covers the outer peripheral wall while the honeycomb structure is received in the storage space.
[6] The honeycomb structure defect inspection device according to the above [4], wherein the elastic ring-shaped member comprises at least one elastic member having an end thereof provided with convex portions and concave portions, the end of the elastic member is joined with the other end of the same elastic member or an end of another elastic member, among the joined ends of the elastic members, the convex portions at the end on one side are inserted into the concave portions at the end on the other side to form a ring-like shape, and the depths of the convex portions inserted into the concave portions are varied to adjust the size of the storage space and adhesion strength of the elastic member adhering to the outer peripheral wall so that the elastic ring-shaped member covers the outer peripheral wall while the honeycomb structure is received in the storage space.
[7] The honeycomb structure defect inspection device according to any one of the above [3] to [6], wherein, in the outer peripheral wall covering means, the surface of the elastic member opposite to the surface thereof adhering to the outer peripheral wall is backed with a rigid member.
[8] A honeycomb structure defect inspection method for a honeycomb structure as set out in claim 8.
[9] The honeycomb structure defect inspection method according to the above [8], wherein, in the outer peripheral wall covering step, at least one elastic member being deformable in accordance with the shape of the outer peripheral wall is allowed to adhere to the outer peripheral wall to cover the outer peripheral wall.
[10] The honeycomb structure defect inspection method according to the above [8] or [9], which simultaneously performs the detection step and the outer peripheral wall covering step.

A honeycomb structure defect inspection device of the present invention can detect the defect portions of the partition walls constituting the cells in the vicinity of the outer peripheral wall with a satisfactory sensitivity.

### BRIEF DESCRIPTION OF THE DRAWINGS

Fig. 1A is a perspective view of a square post-like plugged honeycomb structure.
Fig. 1B is a perspective view of a columnar plugged honeycomb structure.
Fig. 2 is a side view schematically showing that a honeycomb structure defect inspection device of the present invention inspects the presence/absence of defects of the plugged honeycomb structure, and is a see-through diagram showing, by a broken line, the contour of the plugged honeycomb structure which is an inspection target.
Fig. 3 is a diagram showing that a detection medium is discharged from cells, when the front surface of the end face of the plugged honeycomb structure is observed in the honeycomb structure defect inspection device shown in Fig. 2.
Fig. 4 is a diagram schematically showing that the honeycomb structure defect inspection device shown in Fig. 2 detects the defect of the plugged honeycomb structure and including a cross section taken along the A-A' line of Fig. 3.
Fig. 5 is a partially sectional view in the vicinity of an outer peripheral wall of the plugged honeycomb structure and is a diagram for explaining the leakage of a pressure from the outer peripheral wall.
Fig. 6 is a diagram schematically showing that the outer peripheral wall of the plugged honeycomb structure shown in the partial sectional view of Fig. 5 is covered with an elastic member as the outer peripheral wall covering means to suppress the leakage of the pressure from the outer peripheral wall.
Fig. 7 is a perspective view of an elastic ring-shaped member constituted of two elastic members backed with a rigid member.
Fig. 8 is a perspective view showing that the elastic ring-shaped member shown in Fig. 7 covers the outer peripheral wall of the plugged honeycomb structure while the plugged honeycomb structure is received in a storage space.
Fig. 9 is a perspective view of an elastic ring-shaped member constituted of four elastic members.
Fig. 10 is a perspective view showing that the elastic ring-shaped member shown in Fig. 9 covers the outer peripheral wall of the plugged honeycomb structure while the plugged honeycomb structure is received in a storage space.
Fig. 11 is a plan view showing that the plugged honeycomb structure is received in the storage space of the elastic ring-shaped member shown in Fig. 9.
Fig. 12 is a plan view showing that a plugged honeycomb structure larger than the structure shown in Fig. 11 is received in the storage space of the elastic ring-shaped member shown in Fig. 9.
Fig. 13 is a perspective view of an elastic ring-shaped member constituted of two elastic members each having convex and concave portions at the end thereof.
Fig. 14 is a perspective view showing that the elastic ring-shaped member shown in Fig. 13 covers the outer peripheral wall of the plugged honeycomb structure while the plugged honeycomb structure is received in the storage space.
Fig. 15 is a plan view showing that the plugged honeycomb structure is received in the storage space of the elastic ring-shaped member shown in Fig. 13.
Fig. 16 is a plan view showing that a plugged honeycomb structure larger than the structure shown in Fig. 15 is received in the storage space of the elastic ring-shaped member shown in Fig. 13.

### [Reference Numerals]

1: honeycomb structure defect inspection device, 2: defect detection means, 3: outer peripheral wall covering means, 11: plugged honeycomb structure, 12: cell, 12a to 12d: cell, 13: partition wall, 13a to 13c: partition wall, 14: outer peripheral wall, 15: end face, 15a: end face, 15b: end face, 16: plugging portion, 19: axial direction, 20: defect (hole) of partition wall, 21: detection medium (fine particles), 22: medium introducing portion, 23: medium detecting portion (camera), 26: mounting surface, 31: elastic member, 31a to 31d: elastic member, 32: end, 32a to 32d: end, 33: convex portion, 33a: convex portion, 33b: convex portion, 34: concave portion, 34a: concave portion, 34b: concave portion, 35: rigid member, 35a: rigid member, 35b: rigid member, 36: support portion, 36a: support portion, 36b: support portion, 39: storage space, and 40: elastic ring-shaped member.

### DESCRIPTION OF THE PREFERRED EMBODIMENT

Hereinafter, an embodiment of the present invention will be described with reference to the drawings. The present invention is not limited to the following embodiment, and alterations, modifications and improvements can be added without departing from the scope of the present invention.

In a honeycomb structure defect inspection device of the present invention, a detection medium is introduced into cells of a plugged honeycomb structure, and the detection medium in the cells is passed through partition walls of the structure, whereby the state of the detection medium passed through the partition walls and discharged from the ends of cells other than the cells into which the detection medium has been introduced is observed to inspect whether or not a defect such as a large hole, crack, or the like is present in the partition walls. The honeycomb structure defect inspection device of the present invention has a configuration which covers the outer peripheral wall of the honeycomb structure. This improves a sensitivity for identifying the presence/absence of defects in the partition walls constituting the cells in the vicinity of the outer peripheral wall of the honeycomb structure, which has been a theme in a conventional honeycomb structure defect inspection device.

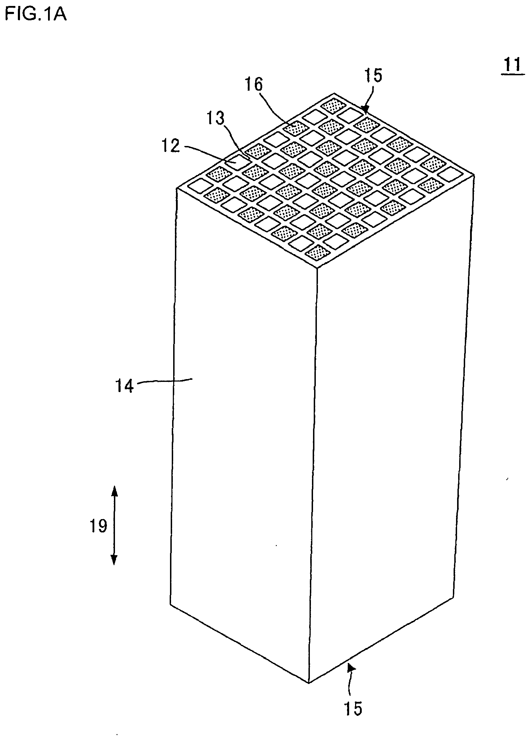

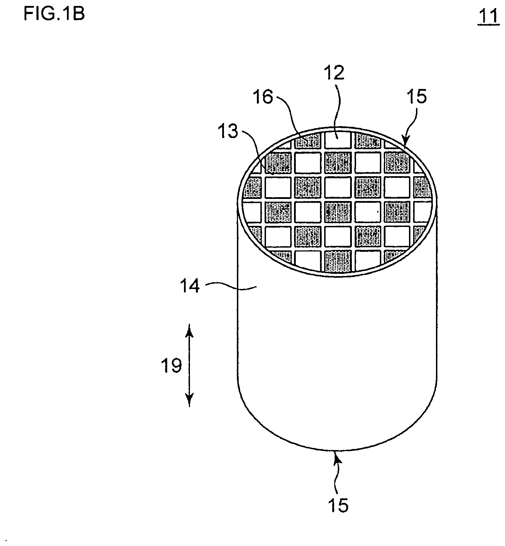

Fig. 1A is a perspective view of a square post-like plugged honeycomb structure 11, and Fig. 1B is a perspective view of the plugged honeycomb structure 11 having a columnar shape. The plugged honeycomb structure 11 has a cell structure portion constituted of partition walls 13 disposed to form a plurality of cells 12 extending through the structure in an axial direction 19 and an outer peripheral wall 14 disposed along the outer periphery of the cell structure portion. Furthermore, in the plugged honeycomb structure 11, one end of each cell 12 is plugged with a plugging portion 16. The plugging portions 16 are disposed in a checkered pattern when seen from an end face 15 of the plugged honeycomb structure.

### 1. Basic embodiment of honeycomb structure defect inspection device of the present invention:

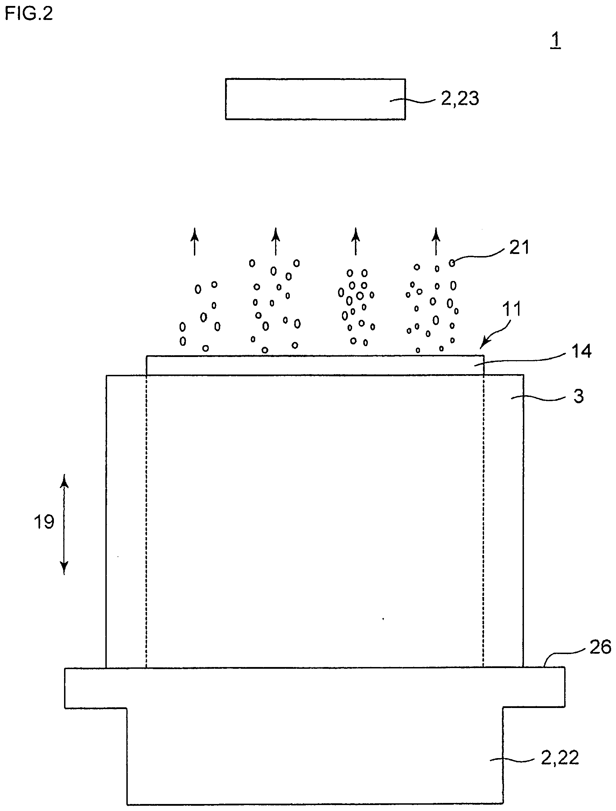

Fig. 2 is a diagram schematically showing that a honeycomb structure defect inspection device 1 belonging to the technical scope of the present invention inspects the presence/absence of defects of the plugged honeycomb structure 11 when seen from a side surface. In this drawing, the contour of the plugged honeycomb structure 11 having the outer peripheral wall 14 covered with an outer peripheral wall covering means 3 is seen through and shown by a broken line. The honeycomb structure defect inspection device 1 of the present invention has a defect detection means 2 and the outer peripheral wall covering means 3.

### 1-1. Defect detection means:

The defect detection means 2 passes a detection medium 21 through the cells 12 of the plugged honeycomb structure 11 and identifies the cell 12 constituted of the partition wall 13 having a defect from the dynamic state of the detection medium 21 discharged from the ends of the cells 12 which are not provided with the plugging portions 16. Next, the defect detection means 2 will be described in detail with reference to the drawings.

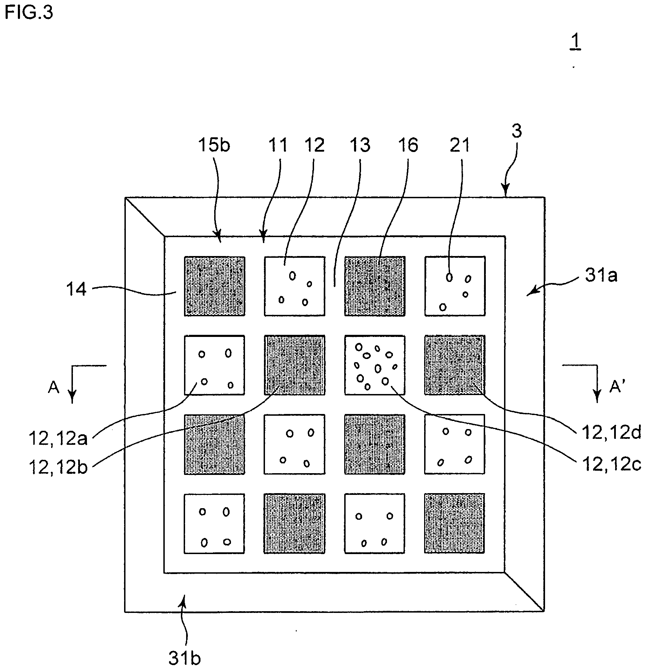

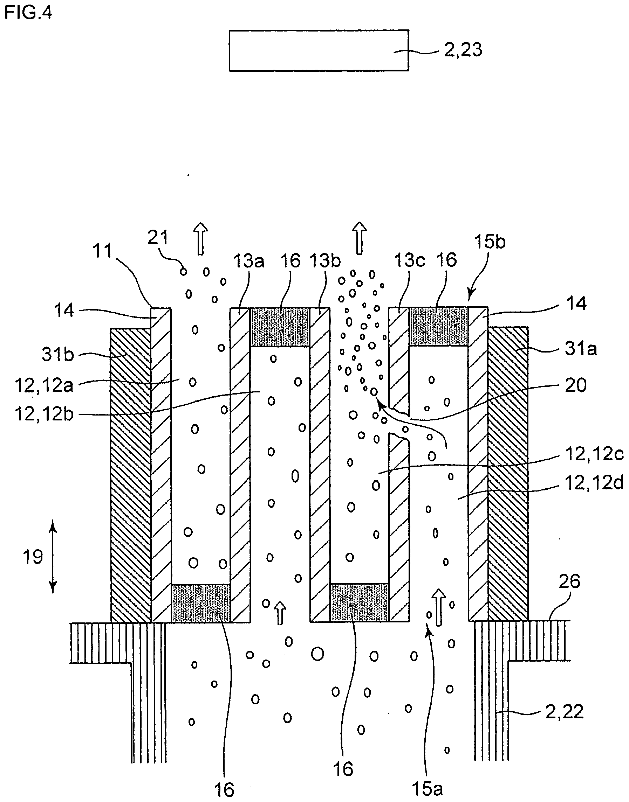

Fig. 3 is a diagram showing that the detection medium 21 is discharged from the ends of the cells 12 which are not provided with the plugging portions 16 in an end face 15b of the plugged honeycomb structure 11 when the front surface of the honeycomb structure defect inspection device 1 shown in Fig. 2 is observed. Fig. 4 is a diagram schematically showing that the honeycomb structure defect inspection device 1 shown in Fig. 2 detects the defects of the plugged honeycomb structure 11 and including a cross section taken along the A-A' line of Fig. 3.

The defect detection means 2 will be described with reference to Fig. 4. First, the defect detection means 2 introduces the detection medium 21 into the cells 12 of the plugged honeycomb structure 11 from one end face 15a in the axial direction 19 while applying a pressure for passing the detection medium 21 through the cells 12. In the embodiment shown in Fig. 4, the plugged honeycomb structure 11 is disposed so as to align the end face 15a with a mounting surface 26 of a medium introducing portion 22. The medium introducing portion 22 introduces the detection medium 21 into the cells 12 from the end face 15a while applying an upward pressure to the detection medium 21. In consequence, the detection medium 21 is introduced into the cells 12 from the one end face 15a, and the introduced detection medium in the cells 12 passes through the partition walls 13 to flow into the adjacent cells 12, and is finally discharged from the other end face 15b. For example, when the detection medium 21 is introduced into a cell 12b from the end face 15a, the detection medium passes through a partition wall 13a or 13b, flows into a cell 12a or 12c, and is finally discharged from the end face 15b.

The defect detection means 2 detects the detection medium 21 discharged from the cells 12 which are open in the end face 15b of the plugged honeycomb structure 11. In the embodiment shown in Fig. 4, a medium detecting portion 23 detects the behavior of the detection medium 21 discharged from the cells 12a and 12c which are open in the end face 15b. In the plugged honeycomb structure 11 shown in Fig. 4, a large hole 20 is present in a partition wall 13c which separates the cell 12c and a cell 12d, that is, the defect 20 of the partition wall is present. Therefore, a large amount of the detection medium 21 which has flowed through the cell 12d flows into the cell 12c through the hole 20. Therefore, a large amount of the detection medium 21 is discharged from the cell 12c as compared with the cell 12a constituted of the normal partition walls 13. In this way, the dynamic state of the detection medium 21 discharged from the cells 12 in the end face 15b of the plugged honeycomb structure 11 is observed, whereby it is possible to identify the presence/absence of a defect such as the large hole 20 of the partition wall 13.

The detection medium 21 has properties to scatter light and where the medium detecting portion 23 is employed in which scattered light generated by irradiating the detection medium 21 discharged from the end face 15b with the light is recorded by a camera. In this case, when the end face 15b of the plugged honeycomb structure 11 is observed from the front surface as shown in Fig. 3, a large amount of the detection medium 21 is discharged from the cell 12c, and hence intense scattered light is observed. Therefore, it can be judged that the partition wall 13 constituting the cell 12c irradiated with the intense scattered light has the defect as compared with the normal cell 12a.

"The dynamic state of the detection medium" detected to identify the presence/absence of the defect of the partition wall 13 is judgment of luminance by the measurement of the intensity of the scattered light.

It is to be noted that, in the honeycomb structure defect inspection device 1 of the present invention, any configuration can be applied to the defect detection means 2 as long as the means passes the detection medium 21 through the cells 12 of the plugged honeycomb structure 11 and identifies the cell 12 constituted of the partition wall 13 having the defect from the dynamic state of the detection medium 21 discharged from the ends of the cells 12 in the end face 15 of the plugged honeycomb structure 11. This also applies to the specific configuration of the detection medium 21.

### 1-2. Outer peripheral wall covering means:

The outer peripheral wall covering means 3 covers a part or all of the outer peripheral wall 14 of the plugged honeycomb structure 11, and suppresses the leakage of the pressure for passing the detection medium 21 through the cells 12 from the outer peripheral wall 14. The leakage of the pressure from the outer peripheral wall 14 is suppressed in this manner, whereby the flow of the detection medium 21 in the cells 12 is maintained, and the discharge of the detection medium 21 from the ends of the normal cells 12 constituted of the partition walls 13 which do not have any defect in the vicinity of the outer peripheral wall 14 can sufficiently be kept.

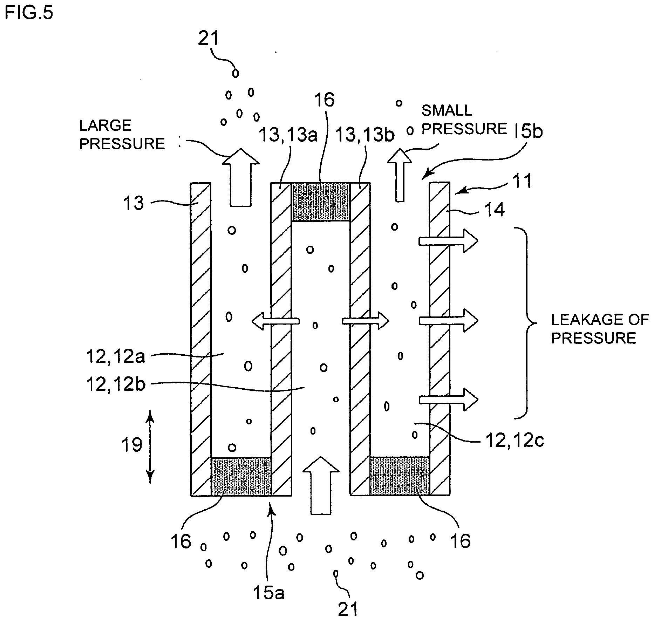

Fig. 5 schematically shows that the detection medium 21 is introduced into the cells 12 of the plugged honeycomb structure 11 while the outer peripheral wall 14 is not covered with the outer peripheral wall covering means 3. When the outer peripheral wall 14 of the plugged honeycomb structure 11 is made of a porous material such as a ceramic material, the pressure for passing the detection medium 21 through the cells 12 leaks from the outer peripheral wall 14. In consequence, the cell 12c in the vicinity of the outer peripheral wall 14 has a smaller pressure for causing the detection medium 21 to flow as compared with the cell 12a in the center, and the detection medium 21 is not sufficiently discharged from the end face 15b. Therefore, even in a case where the cell 12c in the vicinity of the outer peripheral wall 14 has such a normal state that the cell is constituted of the partition walls 13 which do not have any defect, the detection medium 21 discharged from the end face 15b is not easily detected, and it becomes difficult to judge the presence/absence of the defect in the partition walls 13.

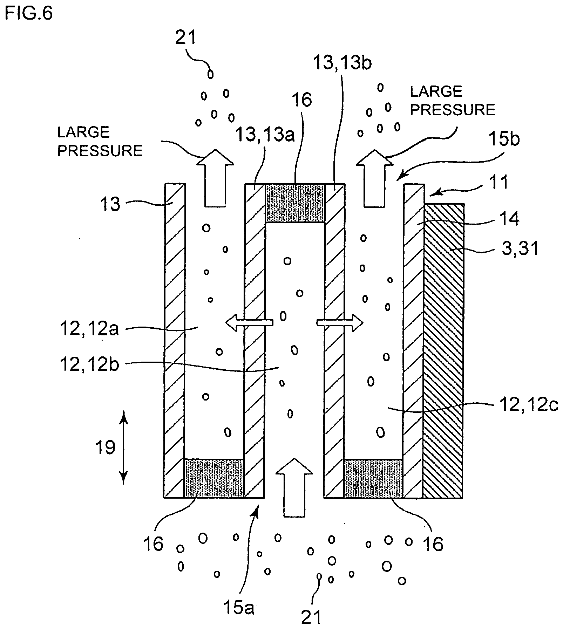

Fig. 6 is a sectional view schematically showing that the detection medium 21 is introduced into the cells 12 of the plugged honeycomb structure 11 while the outer peripheral wall 14 is covered with the outer peripheral wall covering means 3. The outer peripheral wall covering means 3 suppresses the leakage of the pressure from the outer peripheral wall 14, and hence the pressure for causing the detection medium 21 to flow in the cell 12c in the vicinity of the outer peripheral wall 14 covered with the outer peripheral wall covering means 3 is kept at a level which is approximately equal to that in the cells 12a and 12b in the center. Therefore, in the cell 12c shown in Fig. 6, the detection medium 21 is sufficiently discharged from the end face 15b (the cells 12c of Figs. 5 and 6 are compared, and the cell 12a is compared with the cell 12c in Fig. 6). The cell 12c in the vicinity of the outer peripheral wall 14 covered with the outer peripheral wall covering means 3 makes a difference in the dynamic state of the detection medium 21 discharged from the end face 15b between a normal state where the cell is constituted of the partition wall 13 which does not have any defect and an abnormal state where the cell is constituted of the partition wall 13 having the defect, whereby the presence/absence of the defect in the partition walls 13 can be judged.

It is to be noted that "the discharge of the detection medium 21 from the cell 12 constituted of the partition wall 13 which does not have any defect in the vicinity of the outer peripheral wall 14 is sufficiently kept" means what is relative depending on the detection sensitivity of the detection medium 21 by the defect detection means 2. For example, in a case where the detection sensitivity of the detection medium 21 by the defect detection means 2 is low, when the leakage of the pressure from the outer peripheral wall 14 is strictly suppressed by the outer peripheral wall covering means 3, it can be considered that the discharge of the detection medium 21 from the end face 15b is sufficiently kept. On the other hand, in a case where the detection sensitivity of the detection medium 21 by the defect detection means 2 is high, when the leakage of the pressure from the outer peripheral wall 14 is suppressed by the outer peripheral wall covering means 3 to such an extent that the detection medium 21 discharged from the normal cell 12 in the vicinity of the outer peripheral wall 14 can be detected by the defect detection means 2, it can be considered that the discharge of the detection medium 21 from the end face 15b is sufficiently kept. The honeycomb structure defect inspection device 1 of the present invention achieves its purpose when the presence/absence of the defects in the partition walls 13 constituting the cells 12 of the plugged honeycomb structure 11 can be judged.

### 2. Configuration in which the outer peripheral wall covering means covers the outer peripheral wall;

In the honeycomb structure defect inspection device 1 of the present invention, it is essential that the outer peripheral wall covering means 3 covers 35% or more of the total area of the outer peripheral wall 14 of the plugged honeycomb structure 11 which is an inspection target, and it is preferable that the means covers 60% or more of the total area of the outer peripheral wall 14. Needless to say, in the honeycomb structure defect inspection device 1 of the present invention, the effect of the suppression of the leakage of the pressure from the outer peripheral wall 14 increases, whereby it is more preferable that the ratio of the area of the outer peripheral wall 14 covered with the outer peripheral wall covering means 3 increases with respect to the total area of the outer peripheral wall 14.

Moreover, in the honeycomb structure defect inspection device 1 of the present invention, in a case where the outer peripheral wall covering means 3 covers a part of the outer peripheral wall, the covering means preferably covers the outer peripheral wall 14 so that the cover ratio of a half of the outer peripheral wall 14 on the side of the end face 15a through which the detection medium 21 is introduced is larger than that of a half of the outer peripheral wall 14 on the side of the end face 15b from which the detection medium 21 is discharged. In such a configuration, the pressure applied to the detection medium 21 to be passed through the cells 12 is kept to be high in the cells 12 in the vicinity of the end face 15a through which the detection medium 21 is introduced, and the detection medium 21 starts passing through the cells 12 with a high initial speed. Therefore, in this configuration, even in a case where the pressure slightly leaks from the outer peripheral wall 14 in the vicinity of the end face 15b from which the detection medium 21 is discharged, the detection medium 21 already rides on a flow toward the end face 15b and is, therefore, easily discharged from the ends of the cells 12 in the end face 15b.

### 3. Embodiment having the outer peripheral wall covering means for covering the outer peripheral wall with an elastic member:

In a preferable configuration of the honeycomb structure defect inspection device 1 of the present invention, the outer peripheral wall covering means 3 has at least one elastic member 31 which is deformable in accordance with the shape of the outer peripheral wall 14 of the plugged honeycomb structure 11 as the inspection target, and the elastic member 31 is allowed to adhere to the outer peripheral wall 14 to cover the outer peripheral wall 14.

In the outer peripheral wall 14 of the plugged honeycomb structure 11, warpage, bend or another deformation in an allowable range of a product occurs sometimes. Even in a case where the plugged honeycomb structure 11 in which the warpage occurs in the outer peripheral wall 14 is included in the inspection target, when the outer peripheral wall covering means 3 has the elastic member 31 deformable in accordance with the shape of the outer peripheral wall 14 having the warpage or bend and covering the outer peripheral wall 14, the leakage of the pressure from the outer peripheral wall 14 can securely be suppressed.

The elastic member 31 provided in the outer peripheral wall covering means 3 to cover the outer peripheral wall 14 is preferably made of a material which does not have any air permeability in order to exert a function of suppressing the leakage of the pressure from the outer peripheral wall 14. Examples of the material of the elastic member 31 include a synthetic resin material such as silicon, Teflon, candy rubber or nitrile.

Moreover, the elastic member 31 may be a foamed or porous member, but when such a member is used, the surface of the elastic member 31 or the like is preferably covered with a film having high sealing properties so that the outer peripheral wall covering means 3 can suppress the leakage of the pressure from the outer peripheral wall 14.

### 3-1. Embodiment in which an elastic ring-shaped member covers the outer peripheral wall:

### 3-1-1. Basic configuration of elastic ring-shaped member:

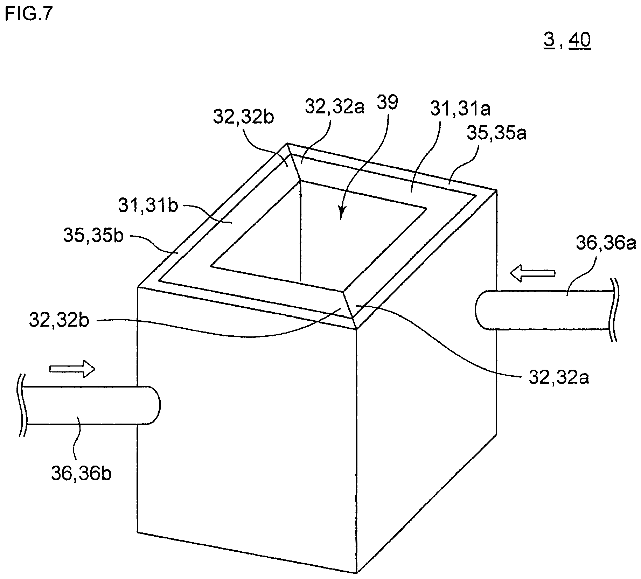

Fig. 7 shows a perspective view of an embodiment of the outer peripheral wall covering means 3. The embodiment will be described with reference to Fig. 7. The outer peripheral wall covering means 3 has at least one elastic member 31 and may have a configuration in which an end 32 of the elastic member 31 is brought into contact with another portion of the same elastic member 31 or a portion of another elastic member 31 to form an elastic ring-shaped member 40 having a ring-like shape including an internal storage space 39.

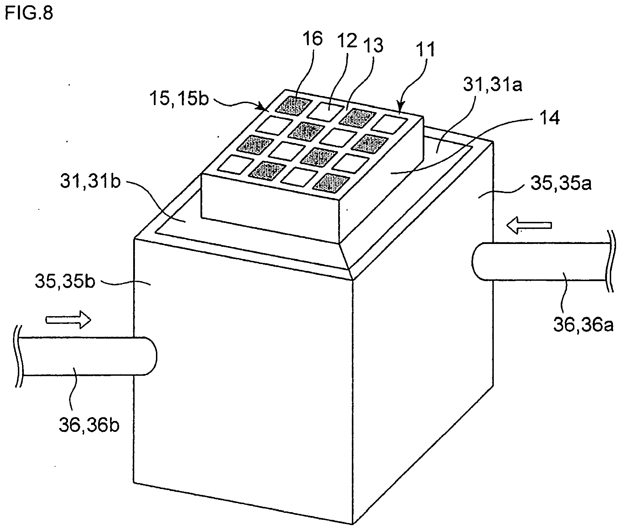

Fig. 8 shows that the plugged honeycomb structure 11 is received in the storage space 39 of the elastic ring-shaped member 40 shown in Fig. 7. As shown in the drawing, in the outer peripheral wall covering means 3 provided with the elastic ring-shaped member 40, the elastic member 31 is allowed to adhere to the outer peripheral wall 14 while the plugged honeycomb structure 11 is received in the storage space 39, whereby the outer peripheral wall 14 is covered to suppress the leakage of the pressure from the outer peripheral wall 14.

The "ring-like shape" of the elastic ring-shaped member 40 mentioned herein is, needless to say, a circular shape and may be a polygonal shape such as a triangular or quadrangular shape, and any shape is allowable as long as the storage space 39 is formed so as to extend through the elastic ring-shaped member 40 and the elastic ring-shaped member 40 can surround the outer peripheral wall 14.

In the elastic ring-shaped member 40 shown in Fig. 7, ends 32a of an L-shaped elastic member 31a are joined with ends 32b of an elastic member 31b having the same L-shape to form a ring-like shape, whereby the storage space 39 having a rectangular parallelepiped shape is formed in the elastic ring-shaped member.

Fig. 8 shows that the square post-like plugged honeycomb structure 11 is received in the storage space 39 of the elastic ring-shaped member 40 shown in Fig. 7. The elastic members 31a and 31b adhere to the outer peripheral wall 14 to cover the outer peripheral wall 14.

There is not any special restriction on a technique in which the plugged honeycomb structure 11 is received in the storage space 39 of the elastic ring-shaped member 40 as shown in Fig. 8, but there are mainly two techniques. Firstly, there is a technique in which the elastic ring-shaped member 40 is beforehand formed into a ring-like shape, and the plugged honeycomb structure 11 is received in the storage space 39 already formed. Secondly, there is a technique in which, when the elastic ring-shaped member 40 is constituted of a plurality of elastic members 31, the individual elastic members 31 separately cover the outer peripheral wall 14, and the end 32 of the elastic member 31 is brought into contact with a portion of the other elastic member 31, whereby the elastic members 31 form the elastic ring-shaped member 40 while covering the outer peripheral wall 14.

When the elastic member 31 is, for example, flexuous, a plate-like flexuous elastic member 31 (not shown) is wound to join both the ends 32, whereby the elastic ring-shaped member 40 can be formed. In the elastic ring-shaped member 40, the plate-like elastic member 31 is wound around the outer peripheral wall 14 of the plugged honeycomb structure 11, whereby the outer peripheral wall 14 can be covered.

### 3-1-2. Elastic ring-shaped member in which the size of the storage space can be adjusted:

Furthermore, the outer peripheral wall covering means 3 provided with the elastic ring-shaped member 40 has a preferable configuration in which the plugged honeycomb structure 11 is received in the storage space 39 to cover the outer peripheral wall 14 while adjusting the size of the storage space 39. The size of the storage space 39 can arbitrarily be adjusted at will. Therefore, even when the plugged honeycomb structures 11 as inspection targets include a plugged honeycomb structure having a different size, the plugged honeycomb structure can efficiently be inspected without changing the elastic ring-shaped member 40.

### 3-1-2-1. Elastic ring-shaped member in which the end of the elastic member is brought into contact with another portion of the same elastic member or a portion of another elastic member:

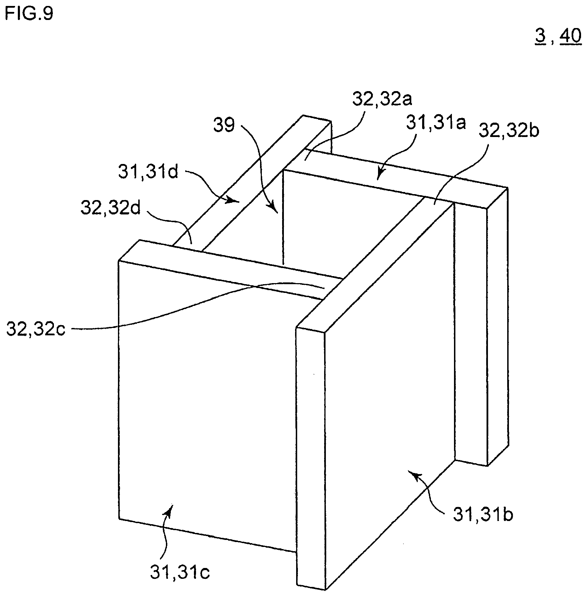

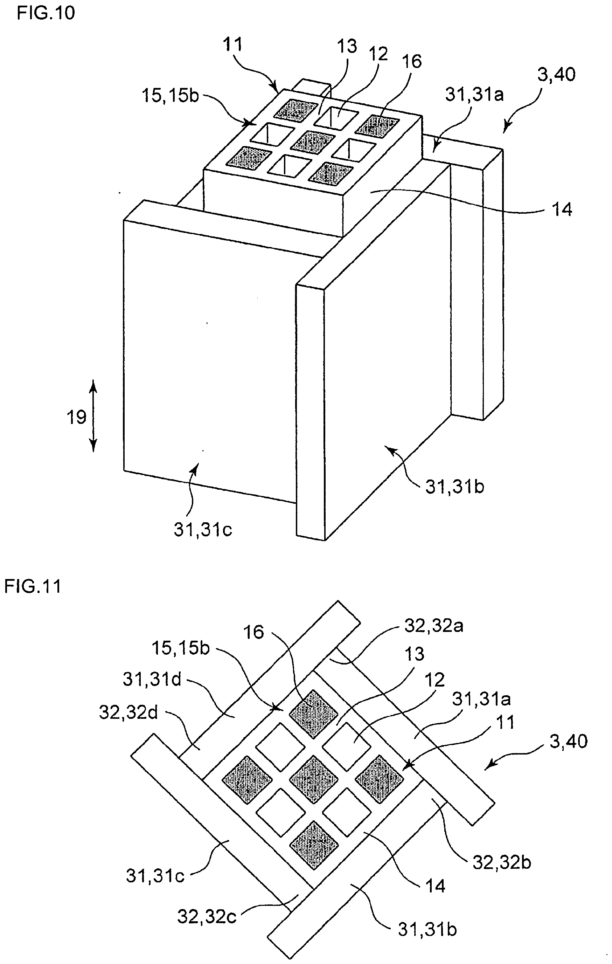

Fig. 9 is a perspective view of the elastic ring-shaped member 40 constituted of four elastic members 31a to 31d. Fig. 10 shows that the plugged honeycomb structure 11 is received in the storage space 39 of the elastic ring-shaped member 40 shown in Fig. 9. Fig. 11 is a diagram of the plugged honeycomb structure 11 received in the storage space 39 of the elastic ring-shaped member 40 shown in Fig. 10 when the end face 15b of the plugged honeycomb structure 11 is observed from the front surface.

The elastic ring-shaped member 40 shown in Figs. 9 to 11 has the four elastic members 31a to 31d, and ends 32a to 32d of the elastic members 31a to 31d are brought into contact with a portion of another elastic member 31 to form a ring-like shape. This respect will specifically be described. The end 32a of the elastic member 31a comes in contact with an intermediate portion of the elastic member 31d, the end 32b of the elastic member 31b comes in contact with an intermediate portion of the elastic member 31a, the end 32c of the elastic member 31c comes in contact with an intermediate portion of the elastic member 31b, and the end 32d of the elastic member 31d comes in contact with an intermediate portion of the elastic member 31c.

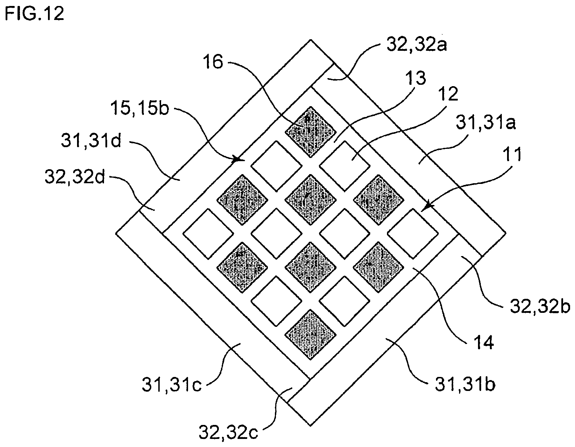

Fig. 12 shows that the plugged honeycomb structure 11 having a large long-diameter of a cross section perpendicular to the axial direction 19 as compared with the structure shown in Fig. 11 is received in the storage space 39 of the elastic ring-shaped member 40 shown in Fig. 9 to cover the outer peripheral wall 14 when the front surface of the end face 15b of the plugged honeycomb structure 11 is observed. As shown in Fig. 12, when the outer peripheral wall 14 of the plugged honeycomb structure 11 having a large long-diameter of the cross section perpendicular to the axial direction 19 is covered, the ends 32a to 32d of the elastic members 31a to 31d come in contact with the portions closer to the ends of other elastic members 31, whereby the storage space 39 of the elastic ring-shaped member 40 can be enlarged.

In this way, in a preferable configuration of the elastic ring-shaped member 40, the portion of the same elastic member 31 or the portion of the other elastic member 31 brought into contact with the end 32 of the elastic member 31 is changed to adjust the size of the storage space 39 and the adhesion strength of the elastic member 31 adhering to the outer peripheral wall 14, whereby the plugged honeycomb structure 11 is received in the storage space 39 to cover the outer peripheral wall 14.

### 3-1-2-2. Elastic ring-shaped member in which convex portions present at the end of the elastic member are inserted into concave portions present at the end of the elastic member:

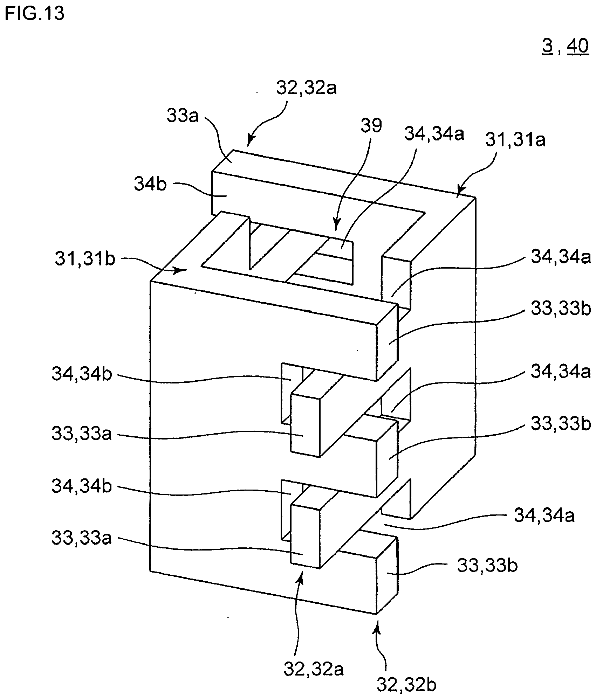

Fig. 13 is a perspective view of the elastic ring-shaped member 40 in which the size of the storage space 39 can be adjusted. As shown in this drawing, the elastic ring-shaped member 40 has at least one elastic member 31 having the end 32 provided with convex portions 33 and concave portions 34. When the end 32 of the elastic member 31 is joined with the end 32 of the same elastic member 31 or the end 32 of another elastic member 31 to form the ring-like shape, among the joined ends 32 of the elastic members 31, the convex portions 33 at the end 32 of one of the elastic members are preferably inserted into the concave portions 34 at the end 32 of the other elastic member.

The elastic ring-shaped member 40 shown in Fig. 13 is formed into a ring-like shape by inserting convex portions 33a at the end 32a of the elastic member 31a into concave portions 34b at the end 32b of the other elastic member 31b, and conversely inserting convex portions 33b at the end 32b of the elastic member 31b into concave portions 34a at the end 32a of the other elastic member 31a.

In the elastic ring-shaped member 40, depths with which the convex portions 33a and 33b are inserted into the concave portions 34b and 34a can be varied to adjust the size of the storage space 39.

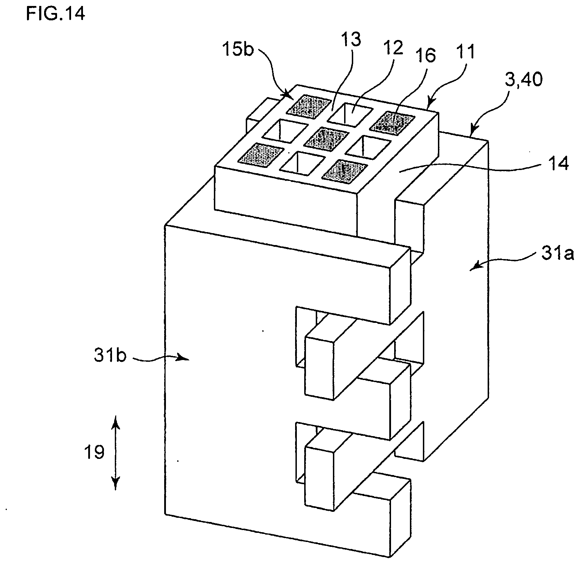

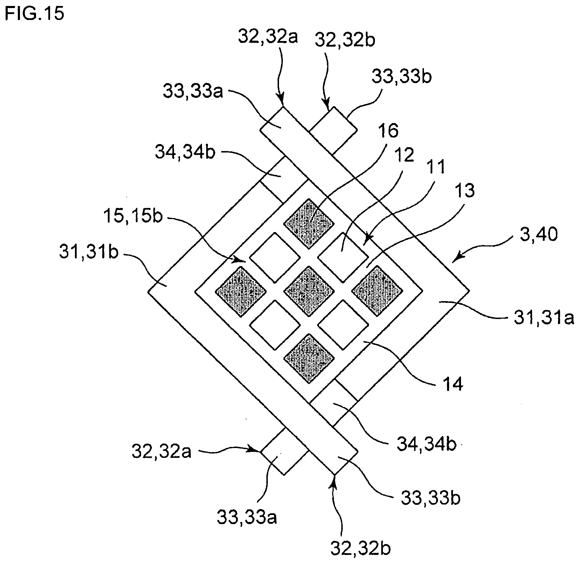

In Figs. 13 and 14, the insertion depths of the convex portions 33a and 33b are adjusted to such an extent that the convex portions 33a and 33b from tips to intermediate portions are inserted into the concave portions 34b and 34a. Fig. 15 is a diagram of the plugged honeycomb structure 11 received in the storage space 39 of the elastic ring-shaped member 40 shown in Fig. 13 when the front surface of the end face 15b of the plugged honeycomb structure 11 is observed. In the elastic ring-shaped member 40 shown in this drawing, the convex portions 33a and 33b are deeply inserted into the concave portions 34b and 34a to reduce the storage space 39, whereby the elastic members 31a and 31b can further adhere to the outer peripheral wall 14 to cover the outer peripheral wall 14. The elastic ring-shaped member 40 having the configuration capable of adjusting the size of the storage space 39 has a function of improving adhesiveness between the elastic members 31 and the outer peripheral wall 14 and effectively suppressing the leakage of the pressure from the outer peripheral wall 14.

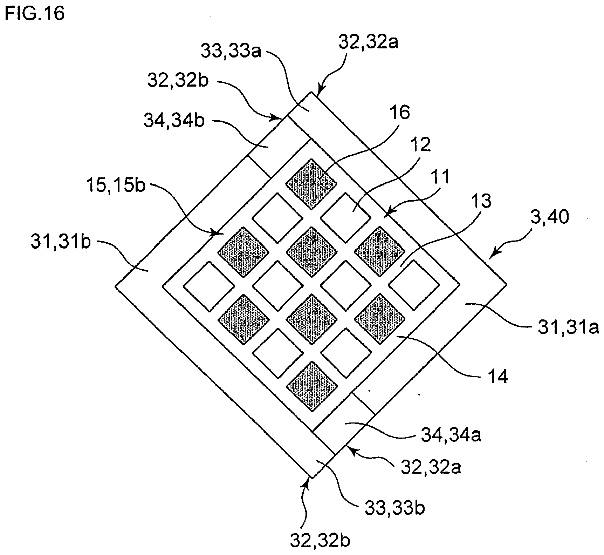

Fig. 16 shows that the plugged honeycomb structure 11 having a large long-diameter of a cross section perpendicular to the axial direction 19 as compared with the structure shown in Fig. 15 is received in the storage space 39 of the elastic ring-shaped member 40 shown in Fig. 13 to cover the outer peripheral wall 14 when the front surface of the end face 15 of the plugged honeycomb structure 11 is observed. As shown in Fig. 16, when the outer peripheral wall 14 of the plugged honeycomb structure 11 having a large long-diameter of the cross section perpendicular to the axial direction 19 is covered, the depths of the convex portions 33a and 33b inserted into the concave portions 34b and 34a can be decreased to enlarge the storage space 39.

### 3-2. Embodiment of the elastic member backed with a rigid member:

In the outer peripheral wall covering means 3 shown in the perspective views of Figs. 7 and 8, the surfaces of the elastic members 31a and 31b opposite to the surfaces thereof adhering to the outer peripheral wall 14 are backed with rigid members 35a and 35b. Moreover, each of support portions 36a and 36b is connected to a part of the outer peripheral surface of each of the rigid members 35a and 35b. In the outer peripheral wall covering means 3, when a pressure is applied from the support portions 36a and 36b to the plugged honeycomb structure 11, forces from the support portions 36a and 36b are securely transmitted to the rigid members 35a and 35b, and then the forces are uniformly propagated to the whole elastic members 31a and 31b without any excess or deficiency.

Therefore, when the outer peripheral wall 14 is covered with the elastic member 31 backed with the rigid member 35, the close attachment between the elastic member 31 and the outer peripheral wall 14 increases in the whole region where the elastic member 31 covers the outer peripheral wall 14, and a function of suppressing the leakage of the pressure from the outer peripheral wall 14 improves.

As described above, when the outer peripheral wall covering means 3 is provided with the elastic member 31 to cover the outer peripheral wall 14, the surface of the elastic member 31 opposite to the surface adhering to the outer peripheral wall 14 is preferably backed with the rigid member 35.

### 3-3. Embodiment of the elastic member constituted of a ring-shaped tube:

Furthermore, it is possible to apply, to the elastic member 31 provided in the outer peripheral wall covering means 3, an elastic ring-shaped member having a technical idea different from the elastic ring-shaped member 40 described above and constituted of a ring-shaped tube expanded by injecting a gas or a liquid into the inside thereof as in a rubber tube used in tires of a bicycle. This type of elastic ring-shaped member has an advantage that the plugged honeycomb structure 11 can be received in a ring to adjust the amount of the gas or the liquid to be injected into the tube, thereby easily adjusting the strength of the close attachment between the elastic ring-shaped member and the outer peripheral wall 14.

### 4. Honeycomb structure defect inspection method:

### 4-1. Basic configuration of the honeycomb structure defect inspection method of the present invention:

A honeycomb structure defect inspection method of the present invention inspects the presence/absence of a defect such as a large hole or crack in the partition walls 13 of the plugged honeycomb structure 11.

A honeycomb structure defect inspection method of the present invention includes a detection step and an outer peripheral wall covering step.

The method will be described with reference to Fig. 4. In the detection step, the detection medium 21 is introduced through the cells 12 from the one end face 15a of the structure in the axial direction 19 while applying a pressure to the detection medium 21 passed through the cells 12 to detect defects of the partition walls 13 constituting the cells 12, and the detection medium 21 passed through the cells 12 and discharged from the other end face 15b of the structure is detected to identify the cell 12 constituted of the partition wall 13 having a defect from the dynamic state of the detection medium 21 discharged from the cells 12 in the other end face 15b of the structure.

The outer peripheral wall covering step is a step of covering 35% or more of the outer peripheral wall 14 so as to maintain the pressure to cause the detection medium 21 in the cells 12 to flow toward the end face 15b while suppressing the leakage of the pressure from the outer peripheral wall 14 and to sufficiently keep the discharge of the detection medium 21 from the cells 12 constituted of the partition walls 13 which do not have any defect in the vicinity of the outer peripheral wall 14 in the end face 15b.

Furthermore, the outer peripheral wall covering step is preferably a step of allowing at least one elastic member 31 which is deformable in accordance with the shape of the outer peripheral wall 14 to adhere to the outer peripheral wall 14 to cover the outer peripheral wall 14.

The outer peripheral wall covering step using the elastic member 31 has an advantage that it is possible to inspect the plugged honeycomb structure 11 having fluctuations of the shape of the outer peripheral wall 14, for example, warpage, bend and other deformations of the outer peripheral wall 14 generated in an actual production site.

Moreover, as shown in Fig. 4, in the honeycomb structure defect inspection method of the present invention, it is preferable to simultaneously perform the detection step and the outer peripheral wall covering step.

### [Examples]

Hereinafter, the present invention will be described in more detail based on examples, but the present invention is not limited to these examples.

### (1) Plugged honeycomb structure:

As a plugged honeycomb structure 11 which was an inspection target, a structure made of silicon carbide and having a square post-like shape with a length of 200 mm in an axial direction 19 and with a square cross section of 39 mm x 39 mm perpendicular to the axial direction 19 was used. Furthermore, in the plugged honeycomb structure 11, the number of cells per cm² of the cross section perpendicular to the axial direction 19 was 40, partition walls had a thicknesses of 300 µm, the outer peripheral wall 14 had a thickness of 510 µm and a porosity of 50%, the average pore diameter of partition walls 13 and the outer peripheral wall 14 was 20 µm, and the size of a hole 20 as a defect generated in the partition wall 13 was a diameter of 0.1 mm. As the plugged honeycomb structure 11 which was the inspection target, two types of the structures were prepared, that is, a specimen having a defect in the partition wall 13 on the side of an end face 15a into which fine particles 21 as a detection medium 21 flowed, and a specimen having a defect in the partition wall 13 on the side of an end face 15b from which the fine particles 21 were discharged. It is to be noted that defect portions of the partition walls of the plugged honeycomb structures 11 as the specimens were confirmed by a CT scan in advance.

### (2) Honeycomb structure defect inspection device:

### (Examples 1 to 9)

As to the defect detection means 2, first, fine particles 21 having an average particle diameter of 3 to 5 µm were used as a detection medium 21. The fine particles 21 were contained in a gas with a concentration of 300 particles/cm³, and the gas containing the fine particles was supplied to the end face 15b side of a plugged honeycomb structure 11 at a flow rate of 14 L/min. and introduced into cells 12. The fine particles 21 discharged from the cells 12 were detected from scattered light generated by irradiating the fine particles with light. As to the outer peripheral wall covering means 3, two L-shaped elastic members 31 each made of a silicon rubber and having a hardness of 30 degrees and a thickness of 4 mm were combined to form an elastic ring-shaped member 40, and an outer peripheral wall 14 was covered while a plugged honeycomb structure 11 having a square post-like shape as described above was received in a rectangular parallelepiped storage space 39 of the elastic ring-shaped member 40.

Examples 1 to 9 were divided in accordance with the elastic ring-shaped member 40 as the outer peripheral wall covering means 3 based on a covered place of the outer peripheral wall 14 of the plugged honeycomb structure 11 and the ratio of the area of the covered outer peripheral wall 14 with respect to the total area of the outer peripheral wall 14. Specifically, as shown in Table 1, the outer peripheral wall 14 was covered along a predetermined length from the end face 15 on the inflow side or outflow side of the fine particles 21.

**[Table 1]**

| | Covered place of outer peripheral wall | Ratio of covered area with respect to total area of outer peripheral wall (%) | Position of defect | Degree of judgment concerning presence/absence of defects in partition walls in the vicinity of outer peripheral wall |
|---|---|---|---|---|
| Comp. Ex. 1 | Length of 40 mm from end face on inflow side | 20% | Inflow side | Bad |
| Example 1 | Length of 70 mm from end face on inflow side | 35% | Inflow side | Not good, but acceptable |
| Example 2 | Length of 80 mm from end face on inflow side | 40% | Inflow side | Not good, but acceptable |
| Example 3 | Length of 120 mm from end face on inflow side | 60% | Inflow side | Good |
| Example 4 | Length of 160 mm from end face on inflow side | 80% | Inflow side | Excellent |
| Example 5 | All from inflow-side end face to outflow-side end face | 100% | Inflow side | Excellent |
| Example 6 | Length of 120 mm from end face on outflow side | 60% | Inflow side | Bad |
| Example 7 | Length of 160 mm from end face on outflow side | 80% | Inflow side | Not good, but acceptable |
| Example 8 | Length of 40 mm from end face on inflow side | 20% | Outflow side | Good |
| Example 9 | Length of 70 mm from end face on inflow side | 35% | Outflow side | Excellent |
| Example 10^{*1} | Length of 120 mm from end face on inflow side | 60% | Inflow side | Good |
| Example 11^{*1*2} | Length of 120 mm from end face on inflow side | 60% | Inflow side | Good |

| | | | | |
|---|---|---|---|---|
| *1: The surface of the elastic member which came in contact with the outer peripheral wall was sealed with a PEI film having a thickness of 35 µm. *2: A plugged honeycomb structure having a cross section of 42 mm x 42 mm perpendicular to an axial direction was an inspection target. | | | | |

### (Example 10)

Example 10 was the same as Example 3 except that the outer peripheral wall covering means 3 having a configuration shown in Figs. 9 and 10 was used, that elastic members 31 constituting the elastic ring-shaped member 40 were made of foamed polyurethane having a porous structure, and that the surface of the elastic member 31 which came in contact with the outer peripheral wall 14 was sealed with a PET film having a thickness of 35 µm.

### (Example 11)

Example 11 was similar to Example 10 except that a plugged honeycomb structure 11 having a square cross section of 42 x 42 mm perpendicular to the axial direction 19 was an inspection target.

As to Examples 1 to 11, how clearly the defects of the partition walls 13 constituting the cells 12 in the vicinity of the outer peripheral wall 14 can be identified is shown in Table 1. In Table 1, a case where the defects can clearly be identified is shown by a double circle (excellent), a case where the defects can stably be identified is shown by a circle (good), a case where the defects can or cannot be judged is sometimes shown by a triangle (not good, but acceptable), and a case where any defect cannot be identified is shown by a cross (bad).

In Examples 1 to 5, the outer peripheral wall 14 at a predetermined ratio from the end face 15a on the inflow side of the plugged honeycomb structure 11 is covered. It is seen from the comparison of the results of Examples 1 to 5 that the degree of the judgment of the defects of the partition walls 13 is excellent as the ratio of the area of the outer peripheral wall 14 covered with the elastic member 31 with respect to the total area of the outer peripheral wall 14 is high.

In the group of Examples 3 and 6 and the group of Examples 4 and 7, the ratios of the area of the outer peripheral wall 14 covered with the elastic member 31 with respect to the total area of the outer peripheral wall 14 were 60% ad 80%, respectively. It is seen from the comparison of the corresponding examples of the groups that Examples 3 and 4 having a high cover ratio of the outer peripheral wall 14 on the inflow side of the fine particles 21 have an excellent degree of the judgment of the defects of the partition walls 13 as compared with Examples 7 and 8 having a high cover ratio of the outer peripheral wall 14 on the outflow side.

It has been found from the comparison of Examples 3 and 10 that even in a case where the surface of the elastic member 31 which comes in contact with the outer peripheral wall 14 is sealed with the PET film, the judgment of the presence/absence of the defects of the partition walls 13 constituting the cells 12 in the vicinity of the outer peripheral wall 14 is suitably performed.

It has been found from the comparison of Examples 10 and 11 that, in the elastic ring-shaped member 40 in which the size of the storage space 39 can be adjusted, the judgment of the presence/absence of the defects of the partition walls 13 constituting the cells 12 in the vicinity of the outer peripheral wall 14 can suitably be performed while adjusting the size of the storage space 39 with respect to the plugged honeycomb structure 11 actually having a different sectional size.

It is to be noted that, although not especially mentioned in Table 1, when the position of the cell 12 corresponding to the detected detection medium is around the center of the end face 15b of the plugged honeycomb structure 11, the degree of the judgment of the defects in all the examples is evaluated as "excellent" in the above reference.

The present invention can be used as a device for inspecting the presence/absence of holes or cracks which are not present in a normal honeycomb structure and which are large as compared with the pore diameters of a honeycomb structure, that is, defects of the honeycomb structure.

## Claims

1. A honeycomb structure defect inspection device (1) for a plugged honeycomb structure (11) comprising a cell structure portion constituted of partition walls (13,13a,13b,13c) disposed to form a plurality of cells (12, 12a, 12b, 12c, 12d) extending through the structure in an axial direction (19) and an outer peripheral wall (14) disposed along the outer periphery of the cell structure portion,
the honeycomb structure defect inspection device comprising:
a defect detection means (2) for introducing a detection medium (21) into cells (12, 12a, 12b, 12c, 12d) from one end face (15a) of the plugged honeycomb structure (11) in the axial direction (19), while applying a pressure to the detection medium (21) to detect defects (20) of the partition walls (13) constituting the cells (12, 12a, 12b, 12c, 12d), and detecting the detection medium (21) passed through the cells (12, 12a, 12b, 12c, 12d) and discharged from the other end face (15b) of the structure to identify the cell (12, 12a, 12b, 12c, 12d) constituted of the partition wall (13) having the defect (20) from the dynamic state of the detection medium (21) discharged from the cells (12) in the other end face (15b) of the plugged honeycomb structure (11);
wherein the detection medium (21) comprises particles contained in a gas, and the detection of the dynamic state of the detection medium (21) comprises judgment of luminance found by measuring the intensity of light scattered by the particles,
**characterized by**
an outer peripheral wall covering means (3) for covering 35% or more of the outer peripheral wall (14) so as to maintain the pressure which causes the detection medium (21) in the cells (12, 12a, 12b, 12c, 12d) to flow toward the other end face (15b) while suppressing the leakage of the pressure from the outer peripheral wall (14) and so as to sufficiently keep the discharge of the detection medium (21) from the cells (12, 12a, 12b, 12c, 12d) constituted of the partition walls (13) which do not have any defect (20) in the vicinity of the outer peripheral wall (14) in the other end face (15b).

2. The honeycomb structure defect inspection device (1) according to claim 1, wherein the outer peripheral wall covering means (3) covers the outer peripheral wall (14) so that a cover ratio of a half of the outer peripheral wall (14) on the side of the one end face (15a) through which the detection medium (21) is introduced is larger than that of a half of the outer peripheral wall (14) on the side of the other end face (15b) from which the detection medium (21) is discharged.

3. The honeycomb structure defect inspection device (1) according to claim 1 or 2, wherein the outer peripheral wall covering means (3) comprises at least one elastic member (31, 31a, 31b, 31c, 31d) that is deformable in accordance with the shape of the outer peripheral wall (14), and the elastic member (31, 31a, 31b, 31c, 31d) is allowed to adhere to the outer peripheral wall (14) to cover the outer peripheral wall (14).

4. The honeycomb structure defect inspection device (1) according to claim 3, wherein the outer peripheral wall covering means (3) comprises at least one elastic member (31, 31a, 31b, 31c, 31d) an end (32, 32a, 32b, 32c, 32d) of the elastic member (31, 31a, 31b, 31c, 31d) is brought into contact with another portion of the same elastic member (31, 31a, 31b, 31c, 31d) or a portion of another elastic member (31, 31a, 31b, 31c, 31d) to form an elastic ring-shaped member (40) having an internal storage space (39), and
the elastic member (31, 31a, 31b, 31c, 31d) is allowed to adhere to the outer peripheral wall (14) so that the elastic ring-shaped member (40) covers the outer peripheral wall (14) while the plugged honeycomb structure (11) is received in the storage space (39) of the elastic ring-shaped member (40).

5. The honeycomb structure defect inspection device (1) according to claim 4, wherein the portion of the same elastic member (31, 31a, 31b, 31c, 31d) or the portion of another elastic member (31, 31a, 31b, 31c, 31d) brought into contact with the end (32, 32a, 32b, 32c, 32d) of the elastic member (31, 31a, 31b, 31c, 31d) is changed to adjust the size of the storage space (39) and the adhesive strength of the elastic member (31, 31a, 31b, 31c, 31d) adhering to the outer peripheral wall (14) so that the elastic ring-shaped member (40) covers the outer peripheral wall (14) while the plugged honeycomb structure (11) is received in the storage space (39).

6. The honeycomb structure defect inspection device (1) according to claim 4, wherein the elastic ring-shaped member (40) comprises at least one elastic member (31,31a) having an end (32, 32a) thereof provided with convex portions (33, 33a) and concave portions (34, 34a), the end (32, 32a) of the elastic member (31, 31a) is joined with the other end (32, 32a) of the same elastic member (31, 31a) or an end (32, 32b) of another elastic member (31, 31b), among the joined ends (32, 32a, 32b) of the elastic members (31, 31a, 31b), the convex portions (33, 33a) at the end (32, 32a) on one side are inserted into the concave portions (34, 34b) at the end (32, 32b) on the other side to form a ring-like shape, and
the depths of the convex portions (33, 33a) inserted into the concave portions (34, 34b) are varied to adjust the size of the storage space (39) and adhesion strength of the elastic member (31, 31a, 31b) adhering to the outer peripheral wall (14) so that the elastic ring-shaped member (40) covers the outer peripheral wall (14) while the plugged honeycomb structure (11) is received in the storage space (39).

7. The honeycomb structure defect inspection device (1) according to any one of claims 3 to 6, wherein, in the outer peripheral wall covering means (3), the surface of the elastic member (31) opposite to the surface thereof adhering to the outer peripheral wall (14) is backed with a rigid member (35, 35a, 35b).

8. A honeycomb structure defect inspection method for a plugged honeycomb structure (11) comprising a cell structure portion constituted of partition walls (13, 13a, 13b, 13c) disposed to form a plurality of cells (12, 12a, 12b, 12c, 12d) extending through the structure in an axial direction (19) and an outer peripheral wall (14) disposed along the outer periphery of the cell structure portion, the honeycomb structure defect inspection method comprising:
a detection step of introducing a detection medium (21) into cells (12, 12a, 12b, 12c, 12d) from one end face (15a) of the plugged honeycomb structure (11) in the axial direction (19), while applying a pressure to the detection medium (21) to detect defects (20) of the partition walls (13, 13a, 13b, 13c) constituting the cells (12, 12a, 12b, 12c, 12d) and detecting the detection medium (21) passed through the cells (12, 12a, 12b, 12c, 12d) and discharged from the other end face (15b) of the plugged honeycomb structure (11) to identify the cell (12, 12a, 12b, 12c, 12d) constituted of the partition wall (13, 13a, 13b, 13c) having the defect (20) from the dynamic state of the detection medium (21) discharged from the cells (12, 12a, 12b, 12c, 12d) in the other end face of the structure (15b);
wherein the detection medium (21) comprises particles contained in a gas, and the detection of the dynamic state of the detection medium (21) comprises judgment of luminance found by measuring the intensity of light scattered by the particles,
**characterized by**
an outer peripheral wall covering step of covering 35% or more of the outer peripheral wall (14) so as to maintain the pressure which causes the detection medium (21) in the cells (12, 12a, 12b, 12c, 12d) to flow toward the other end face (15b) while suppressing the leakage of the pressure from the outer peripheral wall (14) and so as to sufficiently keep the discharge of the detection medium (21) from the cells (12, 12a, 12b, 12c, 12d) constituted of the partition walls (13, 13a, 13b, 13c) which do not have any defect in the vicinity of the outer peripheral wall (14) in the other end face (15b).

9. The honeycomb structure defect inspection method according to claim 8, wherein, in the outer peripheral wall covering step, at least one elastic member (31) being deformable in accordance with the shape of the outer peripheral wall (14) is allowed to adhere to the outer peripheral wall (14) to cover the outer peripheral wall (14).

10. The honeycomb structure defect inspection method according to claim 8 or 9, which simultaneously performs the detection step and the outer peripheral wall covering step.

## Patentansprüche

1. Wabenstrukturdefektinspektionsvorrichtung (1) für eine verschlossene Wabenstruktur (11), umfassend einen Zellstrukturabschnitt, der aus Trennwänden (13, 13a, 13b, 13c), die angeordnet sind, um eine Vielzahl von Zellen (12, 12a, 12b,12c, 12d) auszubilden, die sich in Achsrichtung (19) durch die Struktur erstrecken, und einer Außenumfangswand (14), die entlang dem Außenumfang des Zellstrukturabschnitts angeordnet ist, besteht, wobei die Wabenstrukturdefektinspektionsvorrichtung Folgendes umfasst:
ein Defektdetektionsmittel (2) zum Einbringen eines Detektionsmediums (21) in Zellen (12, 12a, 12b, 12c, 12d) von einer Endfläche (15a) der verschlossenen Wabenstruktur (11) in Achsrichtung (19), während das Detektionsmedium (21) mit Druck beaufschlagt wird, um Defekte (20) der die Zellen (12, 12a, 12b, 12c, 12d) bildenden Trennwände (13) zu detektieren, und zum Detektieren des durch die Zellen (12, 12a, 12b, 12c, 12d) hindurchgeleiteten und aus der anderen Endfläche (15b) der Struktur ausgelassenen Detektionsmediums, um die aus der Trennwand (13) mit dem Defekt (20) bestehende Zelle (12, 12a, 12b, 12c, 12d) anhand des dynamischen Zustands des aus den Zellen (12) an der anderen Endfläche (15b) der verschlossenen Wabenstruktur (11) ausgelassenen Detektionsmediums (21) zu identifizieren;
wobei das Detektionsmittel (21) in einem Gas enthaltene Teilchen umfasst, und das Detektieren des dynamischen Zustands des Detektionsmediums (21) eine Beurteilung der Leuchtdichte umfasst, die durch Messen der Intensität von durch die Teilchen gestreutem Licht festgestellt wird,
**gekennzeichnet durch**
ein Außenumfangswandabdeckmittel (3) zum Abdecken von 35 % oder mehr der Außenumfangswand (14), um den Druck aufrechtzuerhalten, der ein Strömen des Detektionsmediums (21) in den Zellen (12, 12a, 12b, 12c, 12d) hin zur anderen Endfläche (15b) bewirkt, während ein Auslecken des Drucks aus der Außenumfangswand (14) unterdrückt wird, und um das Auslassen des Detektionsmediums (21) aus den Zellen (12, 12a, 12b, 12c, 12d), die aus den Trennwänden (13) bestehen, welche keinen Defekt (20) in der Nähe der Außenumfangswand (14) auf der anderen Endfläche (15b) aufweisen, ausreichend zu halten.

2. Wabenstrukturdefektinspektionsvorrichtung (1) nach Anspruch 1, wobei das Außenumfangswandabdeckmittel (3) die Außenumfangswand (14) derart abdeckt, dass ein Abdeckungsverhältnis von einer Hälfte der Außenumfangswand (14) auf der Seite der einen Endfläche (15a), über die das Detektionsmedium (21) eingebracht wird, größer ist als das einer Hälfte der Außenumfangswand (14) auf der Seite der anderen Endfläche (15b), von der das Detektionsmedium (21) ausgelassen wird.

3. Wabenstrukturdefektinspektionsvorrichtung (1) nach Anspruch 1 oder 2, wobei das Außenumfangswandabdeckmittel (3) mindestens ein elastisches Element (31, 31a, 31b, 31c, 31d), das entsprechend der Form der Außenumfangswand (14) verformbar ist, umfasst, und wobei das elastische Element (31, 31a, 31b, 31c, 31d) an die Außenumfangswand (14) anhaften gelassen wird, um die Außenumfangswand (14) abzudecken.

4. Wabenstrukturdefektinspektionsvorrichtung (1) nach Anspruch 3, wobei das Außenumfangswandabdeckmittel (3) mindestens ein elastisches Element (31, 31a, 31b, 31c, 31d) umfasst und wobei ein Ende (32, 32a, 32b, 32c, 32d) des elastischen Elements (31, 31a, 31b, 31c, 31d) in Berührung mit einem anderen Abschnitt desselben elastischen Elements (31, 31a, 31b, 31c, 31d) oder einem Abschnitt eines anderen elastischen Elements (31, 31a, 31b, 31c, 31d) gebracht wird, um ein elastisches ringförmiges Element (40) auszubilden, das einen inneren Aufnahmeraum (39) umfasst, und wobei das elastische Element (31, 31a, 31b, 31c, 31d) an die Außenumfangswand (14) anhaften gelassen wird, so dass das elastische ringförmige Element (40) die Außenumfangswand (14) abdeckt, während die verschlossene Wabenstruktur (11) im Aufnahmeraum (39) des elastischen ringförmigen Elements (40) aufgenommen ist.

5. Wabenstrukturdefektinspektionsvorrichtung (1) nach Anspruch 4, wobei der Abschnitt desselben elastischen Elements (31, 31a, 31b, 31c, 31d) oder der Abschnitt eines anderen elastischen Elements (31, 31a, 31b, 31c, 31d), der in Berührung mit dem Ende (32, 32a, 32b, 32c, 32d) des elastischen Elements (31, 31a, 31b, 31c, 31d) gebracht ist, geändert wird, um die Größe des Aufnahmeraums (39) und die Haftfestigkeit des elastischen Elements (31, 31a, 31b, 31c, 31d), das an die Außenumfangswand (14) anhaftet, einzustellen, so dass das elastische ringförmige Element (40) die Außenumfangswand (14) abdeckt, während die verschlossene Wabenstruktur (11) im Aufnahmeraum (39) aufgenommen ist.

6. Wabenstrukturdefektinspektionsvorrichtung (1) nach Anspruch 4, wobei das elastische ringförmige Element mindestens ein elastisches Element (31, 31a) umfasst, dessen eines Ende mit konvexen Abschnitten (33, 33a) und konkaven Abschnitten (34, 34a) bereitgestellt ist, wobei das Ende (32, 32a) des elastischen Elements (31, 31a) mit dem anderen Ende (32, 32a) desselben elastischen Elements (31, 31a) oder einem Ende (32, 32b) eines anderen elastischen Elements (31, 31b) zusammengefügt ist, wobei von den zusammengefügten Enden (32, 32a, 32b) der elastischen Elemente (31, 31a, 31b) die konvexen Abschnitte (33, 33a) am Ende (32, 32a) auf einer Seite in die konkaven Abschnitte (34, 34b) am Ende (32, 32b) auf der anderen Seite eingebracht sind, um eine ringförmige Form auszubilden, wobei die Vertiefungen der in die konkaven Abschnitte (34, 34b) eingebrachten konvexen Abschnitte (33, 33a) variiert sind, um die Größe des Aufnahmeraums (39) und die Haftfestigkeit des elastischen Elements (31, 31a, 31b), die an der Außenumfangswand (14) anhaften, einzustellen, so dass das elastische ringförmige Element (40) die Außenumfangswand (14) abdeckt, während die verschlossene Wabenstruktur (11) im Aufnahmeraum (39) aufgenommen ist.

7. Wabenstrukturdefektinspektionsvorrichtung (1) nach einem der Ansprüche 3 bis 6, wobei im Außenumfangswandabdeckmittel (3) die Oberfläche des elastischen Elements (31) entgegengesetzt zu jener Oberfläche desselben, die an der Außenumfangswand (14) anhaftet, mit einem starren Element (35, 35a, 35b) hinterlegt ist.

8. Wabenstrukturdefektinspektionsvorrichtungsverfahren für eine verschlossene Wabenstruktur (11), umfassend einen Zellstrukturabschnitt, der aus Trennwänden (13, 13a, 13b, 13c), die angeordnet sind, um eine Vielzahl von Zellen (12, 12a, 12b,12c, 12d) auszubilden, die sich in Achsrichtung (19) durch die Struktur erstrecken, und einer Außenumfangswand (14), die entlang dem Außenumfang des Zellstrukturabschnitts angeordnet ist, besteht, wobei das Wabenstrukturdefektinspektionsvorrichtungsverfahren Folgendes umfasst:
einen Detektionsschritt des Einbringens eines Detektionsmediums (21) in Zellen (12, 12a, 12b, 12c, 12d) von einer Endfläche (15a) der verschlossenen Wabenstruktur (11) in Achsrichtung (19), während das Detektionsmedium (21) mit Druck beaufschlagt wird, um Defekte (20) der die Zellen (12, 12a, 12b, 12c, 12d) bildenden Trennwände (13) zu detektieren, und zum Detektieren des durch die Zellen (12, 12a, 12b, 12c, 12d) hindurchgeleiteten und aus der anderen Endfläche (15b) der Struktur ausgelassenen Detektionsmediums, um die aus der Trennwand (13) mit dem Defekt (20) bestehende Zelle (12, 12a, 12b, 12c, 12d) anhand des dynamischen Zustands des aus den Zellen (12) an der anderen Endfläche (15b) der verschlossenen Wabenstruktur (11) ausgelassenen Detektionsmediums (21) zu identifizieren;
wobei das Detektionsmittel (21) in einem Gas enthaltene Teilchen umfasst, und das Detektieren des dynamischen Zustands des Detektionsmediums (21) eine Beurteilung der Leuchtdichte umfasst, die durch Messen der Intensität von durch die Teilchen gestreutem Licht festgestellt wird,
**gekennzeichnet durch**
ein Außenumfangswandabdeckschritt des Abdeckens von 35 % oder mehr der Außenumfangswand (14), um den Druck aufrechtzuerhalten, der ein Strömen des Detektionsmediums (21) in den Zellen (12, 12a, 12b, 12c, 12d) hin zur anderen Endfläche (15b) bewirkt, während ein Austreten des Drucks aus der Außenumfangswand (14) unterdrückt wird, und um das Auslassen des Detektionsmediums (21) aus den Zellen (12, 12a, 12b, 12c, 12d), die aus den Trennwänden (13), die keinen Defekt (20) in der Nähe der Außenumfangswand (14) auf der anderen Endfläche (15b) aufweisen, bestehen, ausreichend zu halten.

9. Wabenstrukturdefektinspektionsvorrichtungsverfahren nach Anspruch 8, wobei im Außenumfangswandabdeckschritt mindestens ein elastisches Element (31), das entsprechend der Form der Außenumfangswand (14) verformbar ist, an die Außenumfangswand (14) anhaften gelassen wird, um die Außenumfangswand (14) abzudecken.

10. Wabenstrukturdefektinspektionsvorrichtungsverfahren nach Anspruch 8 oder 9, das gleichzeitig den Detektionsschritt und den Außenumfangswandabdeckschritt durchführt.

## Revendications

1. Dispositif d'inspection de défaut de structure en nid d'abeilles (1) pour une structure en nid d'abeilles obturée (11) comprenant une partie de structure de cellules constituée de parois de séparation (13, 13a, 13b, 13c) disposées de manière à former une pluralité de cellules (12, 12a, 12b, 12c, 12d) s'étendant à travers la structure dans une direction axiale (19) et d'une paroi périphérique extérieure (14) disposée le long de la périphérie extérieure de la partie de structure de cellules,
le dispositif d'inspection de défaut de structure en nid d'abeilles comprenant :
des moyens de détection de défaut (2) pour introduire un milieu de détection (21) dans les cellules (12, 12a, 12b, 12c, 12d) à partir d'une face d'extrémité (15a) de la structure en nid d'abeilles obturée (11) dans la direction axiale (19), tout en appliquant une pression au milieu de détection (21) pour détecter des défauts (20) des parois de séparation (13) constituant les cellules (12, 12a, 12b, 12c, 12d), et détecter le milieu de détection (21) qui est passé à travers les cellules (12, 12a, 12b, 12c, 12d) et déchargé à partir de l'autre face d'extrémité (15b) de la structure pour identifier la cellule (12, 12a, 12b, 12c, 12d) constituée de la paroi de séparation (13) présentant le défaut (20) à partir de l'état dynamique du milieu de détection (21) déchargé des cellules (12) dans l'autre face d'extrémité (15b) de la structure en nid d'abeilles obturée (11) ;
dans lequel le milieu de détection (21) comprend des particules contenues dans un gaz, et la détection de l'état dynamique du milieu de détection (21) comprend le jugement de la luminance trouvée en mesurant l'intensité de la lumière diffusée par les particules,
**caractérisé par**
des moyens de recouvrement de paroi périphérique extérieure (3) pour recouvrir 35 % ou plus de la paroi périphérique extérieure (14) de manière à contenir la pression qui amène le milieu de détection (21) dans les cellules (12, 12a, 12b, 12c, 12d) à s'écouler vers l'autre face d'extrémité (15b) tout en supprimant la fuite de la pression à partir de la paroi périphérique extérieure (14) et de manière à maintenir suffisamment la décharge du milieu de détection (21) à partir des cellules (12, 12a, 12b, 12c, 12d) constituées des parois de séparation (13) qui ne présentent aucun défaut (20) dans le voisinage de la paroi périphérique extérieure (14) dans l'autre face d'extrémité (15b).

2. Dispositif d'inspection de défaut de structure en nid d'abeilles (1) selon la revendication 1, dans lequel les moyens de recouvrement de paroi périphérique extérieure (3) recouvrent la paroi périphérique extérieure (14) de sorte qu'un rapport de recouvrement d'une moitié de la paroi périphérique extérieure (14) du côté de ladite une face d'extrémité (15a) à travers laquelle le milieu de détection (21) est introduit soit supérieur à celui d'une moitié de la paroi périphérique extérieure (14) du côté de l'autre face d'extrémité (15b) à partir de laquelle le milieu de détection (21) est déchargé.

3. Dispositif d'inspection de défaut de structure en nid d'abeilles (1) selon la revendication 1 ou 2, dans lequel les moyens de recouvrement de paroi périphérique extérieure (3) comprennent au moins un élément élastique (31, 31a, 31b, 31c, 31d) qui peut être déformé conformément à la forme de la paroi périphérique extérieure (14), et l'élément élastique (31, 31a, 31b, 31c, 31d) est autorisé à adhérer à la paroi périphérique extérieure (14) pour recouvrir la paroi périphérique extérieure (14).

4. Dispositif d'inspection de défaut de structure en nid d'abeilles (1) selon la revendication 3, dans lequel les moyens de recouvrement de paroi périphérique extérieure (3) comprennent au moins un élément élastique (31, 31a, 31b, 31c, 31d), une extrémité (32, 32a, 32b, 32c, 32d) de l'élément élastique (31, 31a, 31b, 31c, 31d) est amenée en contact avec une autre partie du même élément élastique (31, 31a, 31b, 31c, 31d) ou une partie d'un autre élément élastique (31, 31a, 31b, 31c, 31d) pour former un élément de forme annulaire élastique (40) comportant un espace de stockage interne (39), et
l'élément élastique (31, 31a, 31b, 31c, 31d) est autorisé à adhérer à la paroi périphérique extérieure (14) de sorte que l'élément de forme annulaire élastique (40) recouvre la paroi périphérique extérieure (14) alors que la structure en nid d'abeilles obturée (11) est reçue dans l'espace de stockage (39) de l'élément de forme annulaire élastique (40).

5. Dispositif d'inspection de défaut de structure en nid d'abeilles (1) selon la revendication 4, dans lequel la partie du même élément élastique (31, 31a, 31b, 31c, 31d) ou la partie d'un autre élément élastique (31, 31a, 31b, 31c, 31d) amenée en contact avec l'extrémité (32, 32a, 32b, 32c, 32d) de l'élément élastique (31, 31a, 31b, 31c, 31d) est changée pour ajuster la taille de l'espace de stockage (39) et la résistance d'adhérence de l'élément élastique (31, 31a, 31b, 31c, 31d) adhérant à la paroi périphérique extérieure (14) de sorte que l'élément de forme annulaire élastique (40) recouvre la paroi périphérique extérieure (14) alors que la structure en nid d'abeilles obturée (11) est reçue dans l'espace de stockage (39).

6. Dispositif d'inspection de défaut de structure en nid d'abeilles (1) selon la revendication 4, dans lequel l'élément de forme annulaire élastique (40) comprend au moins un élément élastique (31, 31a) dont une extrémité (32, 32a) est pourvue de parties convexes (33, 33a) et de parties concaves (34, 34a), l'extrémité (32, 32a) de l'élément élastique (31, 31a) est jointe à l'autre extrémité (32, 32a) du même élément élastique (31, 31a) ou à une extrémité (32, 32b) d'un autre élément élastique (31, 31b), parmi les extrémités jointes (32, 32a, 32b) des éléments élastiques (31, 31a, 31b), les parties convexes (33, 33a) au niveau de l'extrémité (32, 32a) d'un côté sont insérées dans les parties concaves (34, 34b) au niveau de l'extrémité (32, 32b) de l'autre côté pour réaliser une forme similaire à un anneau, et
les profondeurs des parties convexes (33, 33a) insérées dans les parties concaves (34, 34b) sont modifiées pour ajuster la taille de l'espace de stockage (39) et la résistance d'adhérence de l'élément élastique (31, 31a, 31b) adhérant à la paroi périphérique extérieure (14) de sorte que l'élément de forme annulaire élastique (40) recouvre la paroi périphérique extérieure (14) alors que la structure en nid d'abeilles obturée (11) est reçue dans l'espace de stockage (39).

7. Dispositif d'inspection de défaut de structure en nid d'abeilles (1) selon l'une quelconque des revendications 3 à 6, dans lequel, dans les moyens de recouvrement de paroi périphérique extérieure (3), la surface de l'élément élastique (31) opposée à la surface de celui-ci adhérant à la paroi périphérique extérieure (14) est doublée avec un élément rigide (35, 35a, 35b).

8. Procédé d'inspection de défaut de structure en nid d'abeilles pour une structure en nid d'abeilles obturée (11) comprenant une partie de structure de cellules constituée de parois de séparation (13, 13a, 13b, 13c) disposées de manière à former une pluralité de cellules (12, 12a, 12b, 12c, 12d) s'étendant à travers la structure dans une direction axiale (19) et d'une paroi périphérique extérieure (14) disposée le long de la périphérie extérieure de la partie de structure de cellules, le procédé d'inspection de défaut de structure en nid d'abeilles comprenant :
une étape de détection pour introduire un milieu de détection (21) dans les cellules (12, 12a, 12b, 12c, 12d) à partir d'une face d'extrémité (15a) de la structure en nid d'abeilles obturée (11) dans la direction axiale (19), tout en appliquant une pression au milieu de détection (21) pour détecter des défauts (20) des parois de séparation (13, 13a, 13b, 13c) constituant les cellules (12, 12a, 12b, 12c, 12d) et détecter le milieu de détection (21) qui est passé à travers les cellules (12, 12a, 12b, 12c, 12d) et déchargé à partir de l'autre face d'extrémité (15b) de la structure en nid d'abeilles obturée (11) pour identifier la cellule (12, 12a, 12b, 12c, 12d) constituée de la paroi de séparation (13, 13a, 13b, 13c) présentant le défaut (20) à partir de l'état dynamique du milieu de détection (21) déchargé à partir des cellules (12, 12a, 12b, 12c, 12d) dans l'autre face d'extrémité de la structure (15b) ;
dans lequel le milieu de détection (21) comprend des particules contenues dans un gaz, et la détection de l'état dynamique du milieu de détection (21) comprend le jugement de la luminance trouvée en mesurant l'intensité de la lumière diffusée par les particules,
**caractérisé par**
une étape de recouvrement de paroi périphérique extérieure pour recouvrir 35 % ou plus de la paroi périphérique extérieure (14) de manière à maintenir la pression qui amène le milieu de détection (21) dans les cellules (12, 12a, 12b, 12c, 12d) à s'écouler vers l'autre face d'extrémité (15b) tout en supprimant la fuite de la pression à partir de la paroi périphérique extérieure (14) et de manière à maintenir suffisamment la décharge du milieu de détection (21) à partir des cellules (12, 12a, 12b, 12c, 12d) constituées des parois de séparation (13, 13a, 13b, 13c) qui ne présentent aucun défaut dans le voisinage de la paroi périphérique extérieure (14) dans l'autre face d'extrémité (15b).

9. Procédé d'inspection de défaut de structure en nid d'abeilles selon la revendication 8, dans lequel, à l'étape de recouvrement de paroi périphérique extérieure, au moins un élément élastique (31) qui peut être déformé conformément à la forme de la paroi périphérique extérieure (14) est autorisé à adhérer à la paroi périphérique extérieure (14) pour recouvrir la paroi périphérique extérieure (14).

10. Procédé d'inspection de défaut de structure en nid d'abeilles selon la revendication 8 ou 9, qui effectue simultanément l'étape de détection et l'étape de recouvrement de paroi périphérique extérieure.
